# EUROPEAN PATENT SPECIFICATION

(11) **EP 2 846 916 B1**
(45) Date of publication and mention of the grant of the patent: **14.06.2017**
(21) Application number: 13722729.4
(22) Date of filing: 07.05.2013
(51) Int. Cl.: B05B 17/06, B01L 3/02, G01N 35/10, B05B 1/02, B05C 5/02

(54) **DISPENSING ASSEMBLY**
AUSGABEANORDNUNG
ENSEMBLE DE DISTRIBUTION

(30) Priority: 08.05.2012 EP 12167107
(43) Date of publication of application: 18.03.2015
(73) Proprietor: Roche Diagnostics GmbH, 68305 Mannheim (DE); F. Hoffmann-La Roche AG, 4070 Basel (CH)
(72) Inventor: BAMMESBERGER, Stefan Borja, 70178 Stuttgart (DE); ERNST, Andreas, 79283 Bollschweil (DE); KOLTAY, Peter, 79117 Freiburg (DE); LOSLEBEN, Nadine, 81677 München (DE); TANGUY, Laurent, 13100 Aix en Provence (FR)
(74) Representative: Richardt Patentanwälte PartG mbB
(86) International application number: PCT/EP2013/059492
(87) International publication number: WO 2013/167594

(56) References cited:
- EP-A1- 1 099 484
- EP-A1- 1 206 966
- JP-A- 2010 175 291
- US-A1- 2007 248 498

## Description

### Field of the invention

The invention relates to the dispensing of fluids.

### Background and related art

In medical laboratories, in vitro diagnostics are commonly performed on biological samples. Such tests may be performed manually using pipettes or maybe performed using an automatic analyzer. Automatic analyzers may automatically add reagents to the biological sample and may measure one or more physical properties of the biological sample during analysis. Automatic analyzers are known in the prior art. For example, European patent EP 1 959 257 A2 discloses an automatic analyzer including a reagent cassette holding mechanism for holding a plurality of reagent cassettes.

United States patent US 5,763,278 discloses an automatic pipetting device for small volumes. The device has a pipetting needle and a diluter having a liquid output with a syringe and a valve. The syringe includes a piston and piston drive. Tubing connects the needle and the liquid output of the diluter. An impulse generator is connected to the device and coupled to liquid in the tubing for generating and applying directly to the liquid a mechanical impulse force of at least 0.1 N·s for separating the liquid from the needle.

United States patent application publication 2007/0248498 A1 discloses an apparatus for dispensing small volumes of liquid from a cartridge. An electro-optically sensing meniscus detector is used to detect the position of an emerging meniscus of a nascent drop from a dispensing tip. A pneumatic piston is used to drive the entire cartridge against a stationary mass to detach a micro drop from the dispensing tip.

European patent application EP 1 206 966 A1 discloses an automatic pipetting system for receiving and releasing liquid samples. The system comprises a pump consisting of a cylinder chamber, a plunger and a plunger drive. An impulse generator imparts an impulse to the plunger which causes a pressure wave within a fluid in the cylindrical chamber for releasing the liquid.

### Summary

The invention provides for a dispensing assembly and an automatic analyzer in the independent claims. Embodiments are given in the dependent claims.

A controller as used herein encompasses a device, machine, or apparatus for controlling the operation and/or function of one or more other devices. Examples of a controller may include, but are not limited to: a computer, a processor, an imbedded system or controller, a programmable logic controller, and a microcontroller. A 'computing device' or 'computer' as used herein encompasses to any device comprising a processor. A 'processor' as used herein encompasses an electronic component which is able to execute a program or machine executable instruction.

A 'computer-readable storage medium' as used herein encompasses any tangible storage medium which may store instructions which are executable by a processor of a computing device. The computer-readable storage medium may be referred to as a computer-readable non-transitory storage medium.

'Computer memory' or 'memory' is an example of a computer-readable storage medium. Computer memory is any memory which is directly accessible to a processor or other controller. 'Computer storage' or 'storage' is an example of a computer-readable storage medium. Computer storage is any non-volatile computer-readable storage medium.

A 'user interface' as used herein is an interface which allows a user or operator to interact with a computer or computer system.

A 'hardware interface' as used herein encompasses a interface which enables a processor or other controller to interact with and/or control an external computing device and/or apparatus. A hardware interface may allow a processor to send control signals or instructions to an external computing device and/or apparatus.

In one aspect the invention provides for a dispensing assembly. The dispensing assembly comprises a cartridge holder. The cartridge holder is operable for receiving a cartridge operable for dispensing a fluid. The cartridge comprises a reservoir operable for receiving the fluid. The reservoir comprises an outlet. The reservoir has an adjustable volume for forcing the fluid through the outlet. In some embodiments the volume of the reservoir may be increased to suck fluid into the reservoir. In some embodiments the volume of the reservoir may also be increased to aspirate liquid through the nozzle. This may be used for example to fill the reservoir.

The cartridge further comprises a nozzle for dispensing the fluid. The nozzle is connected to the outlet. The dispensing assembly further comprises an actuator for actuating the adjustable volume. The dispensing assembly further comprises an impulse generator for imparting an impulse to the nozzle. This embodiment may be beneficial because it may provide a means of dispensing the fluid more accurately. The impulse generator may be able to knock droplets or drops out of the nozzle or off of the nozzle to make the dispensing more reliable and more reproducible.

The impulse generator may take different forms depending on how it is constructed. It may be a piezoelectric actuator and may use such things as a piston or ring for actuating the nozzle. The impulse generator may be pneumatically actuated; this may include a concentric nozzle or a fan jet. The actuator may be an electromagnetically actuated piston and plunger, for example a hard magnet inside of a coil. The impulse generator may further be a piston and plunger actuated by a linear drive or a motor of some sort. The impulse generator may further be an acoustic or ultrasonic impulse generator.

The term "actor" as understood herein relates to a mechanical contact element that can be driven to mechanically act upon another element, e.g. the elastomeric fluid conduit, by exercising a mechanical force.

The impulse generator comprises an actor for contacting the nozzle. The actor may be used for imparting the impulse to the nozzle. The impulse is communicated from the impulse generator directly to the nozzle.

In contrast to the present invention, in United States patent application publication US 2007/0248498 A1 a pneumatic piston is used to drive the entire cartridge against a stationary mass to detach a micro drop from the dispensing tip. Also in contrast to the present invention, European patent application EP 1 206 966 A1 discloses transferring an impulse to the plunger. Both of these documents teach the imparting of an impulse indirectly to the nozzle.

Imparting the impulse directly to the nozzle as is done in the present invention, may reduce the amount of force needed to knock a drop from the nozzle in comparison with the dispensing systems of US 2007/0248498 A1 or EP 1 206 966 A1. This may be particularly beneficial when the fluid to be dispensed is sensitive to shear forces.

The actuator may take several different forms. In one embodiment the actuator is a syringe pump. However, other such sorts of pumps such as peristaltic pump, a diaphragm pump or other pressure-generating system may also be used. In some embodiments the cartridge comprises a plunger, however this is not necessary. There could be no plunger at all or the plunger could be part of the actuator.

In another embodiment the nozzle is a flexible nozzle.

In another embodiment the dispensing assembly further comprises a meniscus detector for detecting a meniscus of the fluid.

In another embodiment the cartridge further comprises a piston wherein the piston is operable for changing the volume of the reservoir and for forcing the fluid through the outlet.

In another embodiment the dispensing assembly further comprises a controller for controlling the actuator and the impulse generator.

In another embodiment the dispensing assembly further comprises a meniscus detector for detecting the meniscus of the fluid. The controller is operable or programmed for controlling the actuator to force the fluid through the outlet. The controller is further operable or programmed for detecting the meniscus using the meniscus detector. The controller is further operable or programmed for controlling the actuator to halt the forcing of the fluid through the outlet when the meniscus is in a predetermined location. This embodiment may be beneficial because if the meniscus is in the same place when the fluid dispensing starts then the dispensing of the fluid may be more accurate, more precise and/or more reproducible. The meniscus may be inside or outside the nozzle. For instance the nozzle may be a long tube-like structure and the meniscus may have a particular position within the tube. In other embodiments the meniscus may be formed by a drop of the fluid hanging from the nozzle. So in this case the meniscus may therefore be inside or outside the flexible nozzle. In many applications, the meniscus is preferably positioned right at the orifice of the nozzle.

In another embodiment the controller is further operable or programmed for controlling the actuator to force a predetermined volume of fluid through the outlet. In some embodiments the actuator may be controlled to force the predetermined volume after the meniscus is in the predetermined location. The controller is further operable or programmed for controlling the impulse generator to impart an impulse to the nozzle after the predetermined volume of fluid is forced through the outlet. This embodiment may be beneficial because it may be used to knock or remove fluid from the nozzle in a controllable and defined fashion; after dispensing this may make the dispensing of the fluid more accurate and more reproducible.

In another embodiment the impulse generator is controlled to impart a predetermined number of impulses of defined duration and force to the nozzle.

In another embodiment the controller is further operable or programmed for controlling the actuator to force a predetermined volume of fluid through the outlet. In some embodiments the predetermined volume of fluid may be forced through the outlet after the meniscus is in the predetermined location. The controller is further operable or programmed for controlling the impulse generator to impart an impulse to the nozzle during the forcing of the predetermined volume of fluid through the outlet and also after the predetermined volume of fluid is forced through the outlet. In this embodiment an impulse is directed towards the nozzle during and after dispensing of the fluid.

In another embodiment the controller is further operable or programmed for controlling the actuator to force a predetermined volume of fluid through the outlet. In some embodiments the actuator may be controlled to force the predetermined volume of fluid through the outlet after the meniscus is in the predetermined location. The controller is further operable or programmed for controlling the impulse generator to impart an impulse to the nozzle during the forcing of the predetermined volume of fluid through the outlet.

In another embodiment the controller is further operable or programmed to control the actuator to withdraw a second predetermined volume of fluid through the outlet from the nozzle after controlling the impulse generator to impart the impulse. This embodiment may be beneficial because it may be used to withdraw fluid from the nozzle further into the nozzle or even back into the reservoir.

In another embodiment the meniscus detector is any one of the following: a capacitive sensor, an optical sensor and a camera. When the meniscus is inside of the nozzle a capacitive sensor may be used to detect the location of the meniscus. In case the nozzle is optically transparent an optical sensor may also be used to determine the location of the meniscus within the nozzle. If the meniscus extends beyond the nozzle then a capacitive sensor, an optical sensor or a camera may each be used to determine the location of the meniscus.

In another embodiment the nozzle is a flexible nozzle and the dispensing assembly further comprises a valve for compressing the flexible nozzle at a compression location. This embodiment may be beneficial because it enables the flexible nozzle to be sealed. This may prolong the lifetime of the fluid within the reservoir. In some embodiments the valve is a pinch valve.

In another embodiment the nozzle may be operable for receiving a cap for sealing it.

In another embodiment withdrawing the second predetermined volume of the fluid causes the meniscus to withdraw to a withdrawal location within the flexible nozzle. The flexible nozzle has an orifice. The compression location is between the withdrawal location and the orifice. This embodiment may be beneficial because all of the fluid has been withdrawn such that it will be sealed by the valve.

In another embodiment the impulse generator comprises an actor for contacting the nozzle. The actor may be used for imparting the impulse to the nozzle or may be considered to attach or detach the impulse generator to the nozzle.

In another embodiment, the impulse generator is in contact or permanent contact with the nozzle. When impulse generator generates an impulse it causes the actor to move which in turn imparts an impulse to the nozzle. This impulse causes the nozzle to move also. In this embodiment the actor causes a brief momentary displacement of the nozzle. Since the actor is already in contact with the nozzle there is no impact. The imparting of the impulse without an impact may be beneficial if the fluid has a delicate component such as stem cells. In some embodiments, the impulse generator causes the actor to move approximately 30 µm.

In another embodiment the dispensing assembly further comprises a linear translator for placing the actor in contact with the nozzle. For example the linear translator may move the entire impulse generator and the actor such that the actor is in contact with the nozzle. A translation table could for example have a range of movement of 20 mm.

In another example, the linear translator is a part which expands or contracts between the impulse generator and the actor such that the impulse generator remains in a fixed position as the actor is positioned to be in contact with the nozzle.

In another embodiment the meniscus detector is located between the orifice and the actor.

In another embodiment there is a first distance between the meniscus detector and the orifice to prevent contamination of the meniscus detector when dispensing the fluid.

In another embodiment there is a second distance between the meniscus detector and the actor to prevent motion of the actor from affecting operation of the meniscus detector.

In another embodiment the meniscus detector is operable for measuring the meniscus location within the nozzle. For example the side walls of the nozzle can be transparent and the meniscus detector may be optical. In other embodiments the meniscus detector may be a capacitive detector.

In another embodiment the actor is operable for moving approximately 30 micrometers when receiving an impulse from the impulse generator. For example when the actor is already in contact with the nozzle, it may receive an impulse which causes the actor and the nozzle to move 30 micrometers.

In another embodiment the nozzle forms a channel or is a tube. In one example, the reservoir has an inner diameter of approximately 500 micrometers, 200 micrometers, or 1 mm in diameter. The cross section of the nozzle need not be circular.

In another embodiment the nozzle has a side wall. The actor is operable for transferring the impulse of the impulse generator to the side wall. This embodiment may be beneficial because it would require a low force to knock any droplets off of the nozzle. In some cases the fluid may contain fragile structures which could be damaged by large impacts. If the actor and the side wall are in contact before the impulse is generated, then the nozzle is moved without an impact from the actor.

In another embodiment the impulse generator is operable for imparting an impulse to the nozzle by impacting the nozzle with the actor.

In another embodiment the nozzle is formed from a plastic. This embodiment may be beneficial because the nozzle is extremely light and therefore requires less force to knock a droplet off than other materials such as metal or glass.

In another embodiment the nozzle is operable for dispensing the fluid in a first direction. The actor is operable for contacting the nozzle with motion in a second direction. The first direction is transverse or almost transverse to the second direction. This embodiment may be beneficial because applying the impulse transverse to the direction of dispensing may reduce the shear forces necessary to knock a droplet free.

In one example the first direction is vertical or mostly vertical in an operating position of the dispensing assembly. In this case the second direction is horizontal or mostly horizontal.

In another embodiment the dispenser is a micro-fluidic dispensing assembly.

In another embodiment the dispensing assembly is operable for dispensing any one of the following volumes: less than 10 ml, less than 5 mL, less than 1 mL, less than 10 µL, less than 500 nL, less than 200 nL, less than 100 nL, and less than 20 nL.

In another embodiment the dispensing assembly comprises the cartridge.

In another embodiment the cartridge comprises the fluid.

In another embodiment the fluid comprises a reagent.

In another embodiment the fluid comprises a blood grouping reagent.

In another embodiment the fluid comprises a solvent.

In another embodiment the fluid comprises a diluent.

In another embodiment the fluid comprises a catalyst.

In another embodiment the fluid comprises an antibody.

In another embodiment the fluid comprises an enzyme.

In another embodiment the fluid comprises a recombinant protein.

In another embodiment the fluid comprises a virus isolate.

In another embodiment the fluid comprises a virus.

In another embodiment the fluid comprises a biological reagent.

In another embodiment the fluid comprises a protein.

In another embodiment the fluid comprises a salt.

In another embodiment the fluid comprises a detergent.

In another embodiment the fluid comprises a nucleic acid.

In another embodiment the fluid comprises an acid.

In another embodiment the fluid comprises a base.

In another embodiment the fluid comprises a dispersion such as a dispersion of particies within the fluid.

In another embodiment the fluid comprises latex particles.

In another embodiment the fluid comprises nanoparticles.

In another embodiment the fluid comprises magnetic particles.

In another embodiment the fluid comprises stem cells.

In another embodiment the fluid comprises cells.

In another embodiment the fluid comprises biological structures.

In another embodiment the fluid comprises microorganisms.

In another embodiment the cartridge comprises a syringe. For instance the syringe may be connected to a nozzle and a syringe pump may be used as the actuator for actuating the syringe.

In another embodiment the actuator is a syringe pump.

In another aspect the invention provides for an automatic analyzer for analyzing the biological sample comprising a dispensing assembly according to an embodiment of the invention.

It is understood that one or more of the aforementioned embodiments of the invention may be combined as long as the combined embodiments are not mutually exclusive.

### Brief description of the drawings

In the following embodiments of the invention are explained in greater detail, by way of example only, making reference to the drawings in which:
- Fig. 1: illustrates a dispenser assembly according to an embodiment of the invention.
- Fig. 2: illustrates a dispenser assembly according to a further embodiment of the invention;
- Fig. 3: illustrates a dispenser assembly according to a further embodiment of the invention;
- Fig. 4: illustrates an automatic analyzer according to an embodiment of the invention;
- Fig. 5: illustrates a dispenser assembly according to a further embodiment of the invention;
- Fig. 6: illustrates a dispenser assembly according to a further embodiment of the invention;
- Fig. 7: illustrates a dispenser assembly according to a further embodiment of the invention;
- Fig. 8: illustrates an example of a tube and a piston which are used to form a reservoir;
- Fig. 9: illustrates a dispenser assembly according to a further embodiment of the invention;
- Fig. 10: illustrates a dispenser assembly 1000 which is similar to the dispenser assembly shown in Fig. 2; and
- Fig. 11: shows a plot of the viscosity versus surface tension for several different fluids used as test liquids.

### Detailed description

Like numbered elements in these figures are either equivalent elements or perform the same function. Elements which have been discussed previously will not necessarily be discussed in later figures if the function is equivalent.

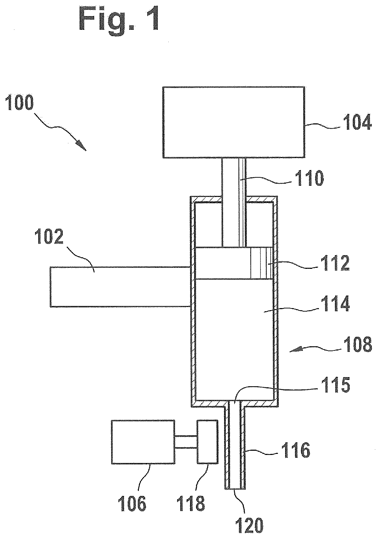

Fig. 1 illustrates a dispenser assembly 100 according to an example. The dispensing assembly 100 comprises a cartridge holder 102, an actuator 104 and an impulse generator 106. The cartridge holder 102 is shown as being attached to a cartridge 108. The actuator 104 in this example is shown as having a plunger 110 in contract with a piston 112. The plunger 110 and piston 112 may not be present in all embodiments. Depending upon the implementation the plunger 110 and/or the piston 112 could be components of the dispenser assembly 100 or the cartridge 108. The cartridge 108 in this embodiment has a reservoir 114 whose size is controlled by the piston 112. Moving the piston 112 makes the reservoir 114 larger or smaller. The reservoir 114 has an outlet 115 into a nozzle 116. The impulse generator 106 has an actor 118 which is able to come in physical contact with the nozzle 116. The piston 112 is able to be depressed to force fluid from the reservoir 114 through the nozzle 116. This enables fluid to be forced out of an orifice 120 in the nozzle 116. The impulse generator 106 is able to use the actor 118 to physically contact the nozzle 116 to knock droplets out of the nozzle 116.

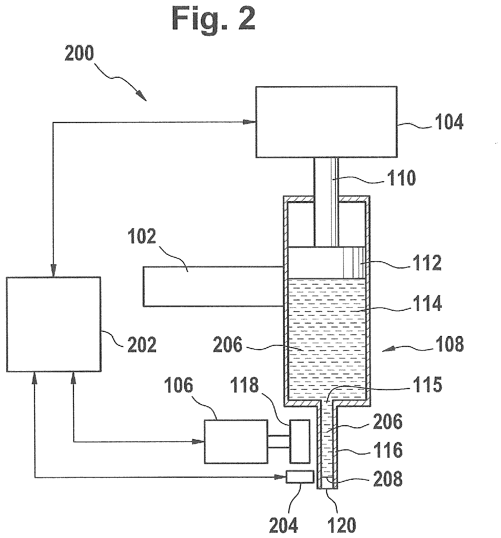

Fig. 2 shows a further example of a dispenser assembly 200 according to an embodiment of the invention. This embodiment is similar to that shown in Fig. 1 except in this case the dispenser assembly 200 further comprises a controller 202 and a meniscus detector 204. The controller 202 is a controller or other control apparatus which is adapted for controlling the actuator 104, the impulse generator 106 and the meniscus detector 204. The meniscus detector 204 is adapted for detecting a meniscus 208 in the nozzle 116. The reservoir 114 and the nozzle 116 are shown as containing a fluid 206. With the meniscus detector 204 the controller 202 is able to control the actuator 104 such that the piston 112 is depressed the right amount to position the meniscus 208 in a precise location. Doing this before beginning the dispensing process the dispenser apparatus 200 is able to more accurately dispense the proper amount of fluid 206.

In Fig. 2 the meniscus detector 204 is illustrated by a small box to one side of the nozzle 116. This representation of the meniscus detector 204 is intended to be representative. For example if the meniscus detector is a capacitive detector, the meniscus detector 204 may surround all or a portion of the nozzle 116.

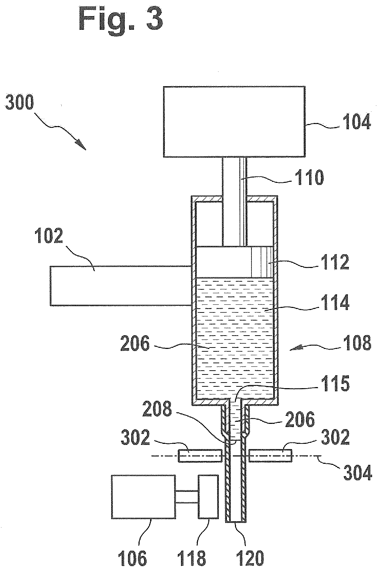

Fig. 3 shows a dispenser assembly 300 according to a further example. The example shown in Fig. 3 is similar to that shown in Figs. 1 and 2. In this example the dispenser assembly 300 comprises a pinch valve 302 and the nozzle 116 is flexible. The pinch valve 302 is adapted for squeezing and pinching closed the flexible nozzle 116 at a compression location 304. This location at which the pinch valve closes the flexible nozzle 116 is marked by the dashed line.. In this example it can be seen that the compression location 304 is between the orifice 120 and the fluid meniscus 208. When the pinch valve 302 closes the entire volume of the fluid 206 will be sealed from the atmosphere.

In Fig. 3 the representation of the pinch valve 302 by 2 rectangles is intended to be representative. Different sorts of mechanisms could be used to function as a pinch valve 302. For instance the pinch valve 302 may be a single movable piece which presses or compresses the flexible nozzle 116 against a stationary object.

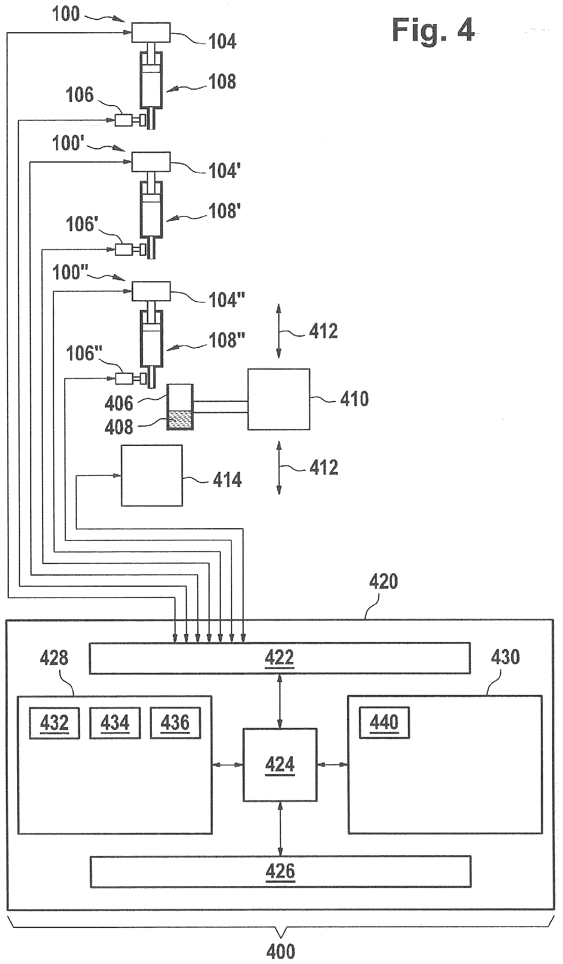

Fig. 4 illustrates an automatic analyzer 400 according to an embodiment of the invention. This automatic analyzer is shown as having three cartridges 108, 108' and 108". There is an dispenser assembly 100 connected to cartridge 108. There is an dispenser assembly 100' attached to cartridge 108'. There is an dispenser assembly 100" attached to cartridge 108". The dispenser assemblies 100, 100', and 100" are equivalent to the dispenser assembly 100 shown in Fig. 1. However not all components of the dispenser assembly are detailed in Fig. 4.

The automatic analyzer 400 is shown as having a relative movement means 410 which provides relative movement 412 between a sample holder 406 and the cartridges 108, 108' and 108". The sample holder 406 is shown as containing a biological sample 408. The cartridges 108, 108', 108" may be used to add one or more fluids to the biological sample 408. The automatic analyzer 400 is shown as further containing a sensor system 414. The sensor system comprises one or more sensors for measuring a physical quantity or physical property of the biological sample 408. For example the sensor system 414 may comprise an NMR system, an optical transmission or reflectance measurement system, a spectrometric measurement system, an electrochemical or optical sensor, a pH meter, a camera system, and a chromatography system. The relative movement means 410 is also operable for moving the sample holder 406 to the sensor system 414.

The arrangement of the cartridges 108, 108', 108" and the sensor system 414 is representative. In some embodiments the sample holder 406 may remain in a fixed position and the cartridges 108, 108', 108" may move. Each cartridge 108, 108', 108" is shown as being installed in a dispenser assembly 100, 100', 100".

The dispenser assemblies 100, 100', 100" each comprise an impulse generator 106, 106', 106"and an actuator 104, 104', 104". The impulse generators 106, 106', 106", the actuators 104, 104', 104", and the sensor system 414 are shown as being connected to a hardware interface 422 of a computer system 420. The computer system 420 functions as a controller for the automatic analyzer 400. The computer 420 is further shown as containing a processor 424 which is able to control the operation and function of the automatic analyzer 400 using the hardware interface 422. The processor 424 is shown as further being connected to a user interface 426, computer storage 428 and computer memory 430. The computer storage 428 is shown as containing an analysis request 432. The analysis request 432 contains a request to analyze the biological sample 408.

The computer storage 428 is shown as further containing sensor data 434 received from the sensor system 414. The computer storage 428 is shown as further containing an analysis result 436 which was determined using the sensor data 434. The computer memory 430 contains a control module 440. The control module 440 contains computer executable code which enables the processor 424 to control the operation and function of the automatic analyzer 400. For instance the control module 440 may use the analysis request 432 to generate commands to generate and send to the dispenser assemblies 100, 100', 100", the sensor system 414 and the relative movement system 410. The control module 440 may also generate the analysis result 436 using the sensor data 434.

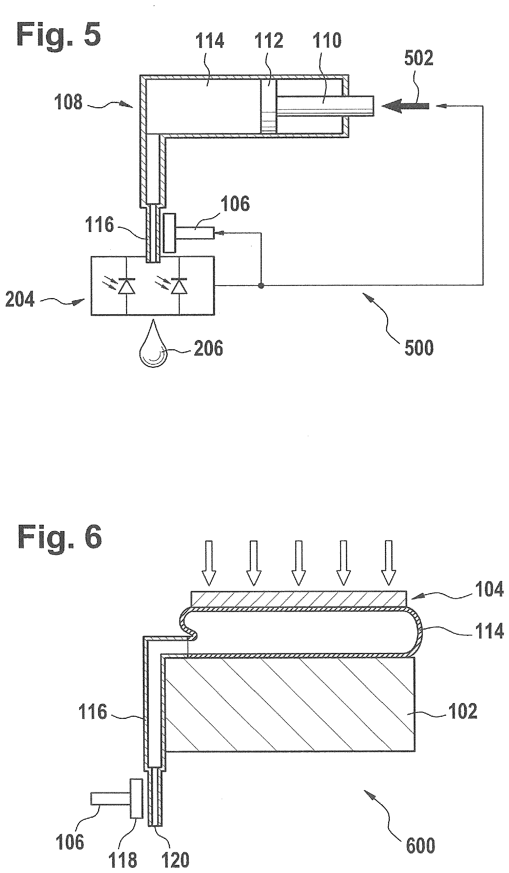

Fig. 5 shows a functional diagram of a dispenser assembly 500 according to an example. The exampleshown in Fig. 5 is similar to that shown in Figs. 1, 2 and 3. In this example a syringe pump 502 is used as the actuator. In this example an optical detector is used as the meniscus detector 204, it may also be used to measure droplets of fluid 206 exiting from the nozzle 116.

Fig. 6 shows a dispenser assembly 600 according to an alternative example. In this example there is a reservoir 114 that is bag-like and the actuator 104 exerts pressure directly on the reservoir 114 to force liquid out of the orifice 120. The bag-like reservoir 114 is squeezed between the actuator 104 and the cartridge holder 102.

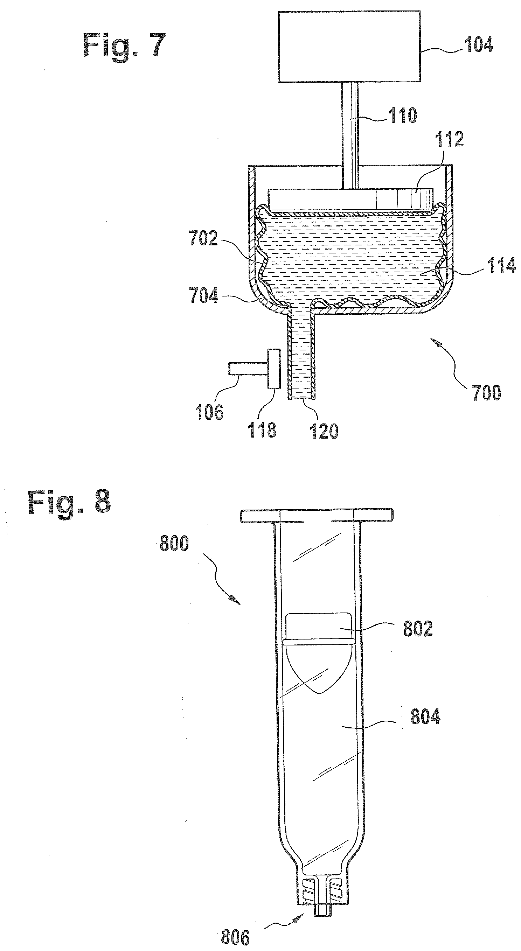

Fig. 7 shows a dispenser assembly 700 according to a further example. This example is similar to the examples shown in Figs. 1, 2, 3 and 5. In this case the reservoir 114 is formed by a bag 702 which is contained within a bag support 704. The plunger 112 is used to compress the bag 702 and force fluid out of the orifice 120.

Fig. 8 shows an example of a tube 800 and a piston 802 which are used to form a reservoir 804. The reservoir 804 has an outlet 806. In this example the piston 802 could be actuated by a plunger attached to an actuator. In this example the outlet 806 is shown as have an Luer-Lock connection.

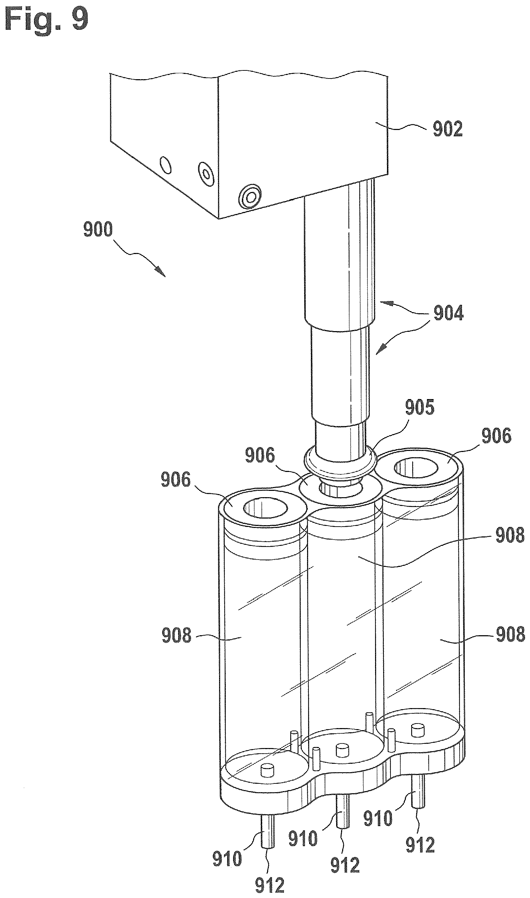

Fig. 9 illustrates a further example of a dispenser assembly 900. In this example there is a syringe pump 902 which functions as the actuator 104. There is a plunger 904 which is actuated by the syringe pump 902. The inflatable gripper 905 on the end of the plunger 904 is able to grab pistons 906 each of which are mounted at the end of the reservoirs 908. The plunger 904 is then able to move a piston back and forth to change the volume of the reservoir 908. At the bottom of the reservoir 908 is a nozzle 910 with an orifice 912 through which fluid is forced out of. As an alternative to the inflatable gripper 905, other types of grippers; e.g., holding the piston by vacuum, electromagnetic holding systems, and etc.; could be used.

In another embodiment a robotic arm could move the cartridge from a parking to a dispensing position and vice versa.

In another embodiment a contact or distance sensor could be integrated into the plunger to detect the distance to the piston when the piston is to be contacted by the plunger. If the plunger is part of the cartridge, a finger gripper with a contact sensor could be added to contact the plunger.

In another embodiment the impulse generator may be put in contact with the nozzle before an impulse is generated by the impulse generator. After the dispensing process, the impulse generator may be removed to a sufficient distance in order to be able to remove the cartridge without touching the impulse generator with the orifice or the reagent. This may help to eliminate or reduce cross contamination. For this automation purpose an additional actor may be beneficial. For example, a pneumatic linear actuator may be used.

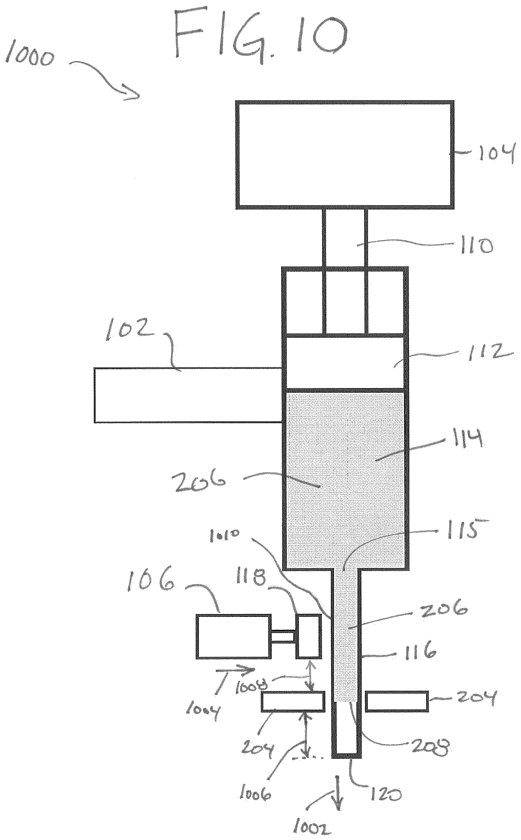

Fig. 10 shows a dispenser assembly 1000 which is similar to the dispenser assembly shown in Fig. 2. The dispenser assembly 1000 may also have a controller, but it is not shown in this figure. For example the dispense assembly may have a controller 202 as is shown in Fig. 2 or a controller 420 as is shown in Fig. 4.

The meniscus detector 204 is shown as surrounding the nozzle 116. The dispenser assembly 1000 is operable for dispensing the fluid in a first direction 1002. For instance the dispenser may dispense the fluid in a downward vertical direction. The actor 118 is operable for moving in the direction 1004. The direction 1002 and the direction 1004 are shown as being transverse or approximately transverse to each other. The meniscus detector 204 is a first distance 1006 from the orifice 120. Placing the meniscus detector 204 at the first distance 1006 prevents fluid 114 which is been dispensed from contacting the meniscus detector 204.

In some examples the actor 118 may be in contact with a sidewall 1010 of the nozzle 116 before the impulse generator 106 generates the impulse.

The meniscus detector 204 is placed at a second distance 1008 from the actor 118. This is done so that when the actor 118 is contacting the sidewall 1010 of the nozzle 116 the motion of the actor does not interfere with the operation of the meniscus detector 204. The arrangement shown in figure 10 may be particularly beneficial if the nozzle 116 is constructed of a material such as plastic. The actor 118 contacts the nozzle 116 directly. This means that not much force needs to be transferred to the nozzle 116 in order to knock droplets off the orifice 120 . If the fluid 114 contains a component which may be damaged due to high shear forces, for example stem cells, this arrangement may help reduce the risk of damaging those components. If for instance forces were applied to the entire assembly 1000 or to the plunger 110 a larger amount of force would need to be transferred in order to knock a droplet off the orifice 120.

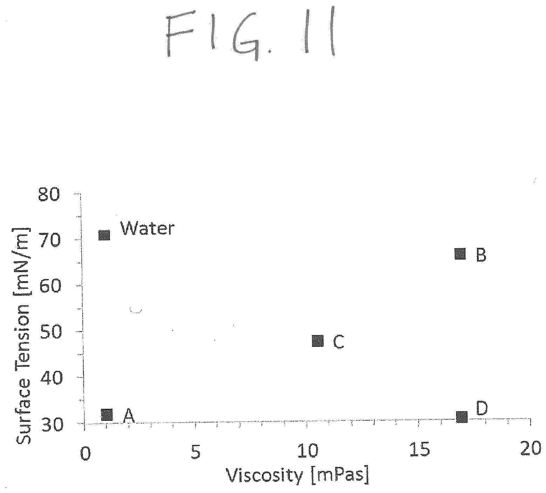

Figure 11 shows a plot of the viscosity versus surface tension for several different fluids used as test liquids. Table 1 lists these fluids along with the viscosity, the surface tension, and the density for each of the fluids.

**Table 1**

| Model Fluid | Viscosity / mPas | Surface Tension / mN/m | Density / kg/m³ |
|---|---|---|---|
| A | 1.0 | 31.9 | 998 |
| B | 16.9 | 65.9 | 1169 |
| C | 10.5 | 47.3 | 1139 |
| Water | 1.0 | 70.8 | 998 |
| D | 16.9 | 30.5 | 1169 |

The tests liquids in table 1 cover the typical range of viscosities, surface tensions and densities of reagents that are typically used for in-vitro diagnostics. To evaluate the dispensing performance for liquids of different viscosities and surface tensions the fluids shown in Fig. 11 and Table 1 were characterized using an example of a dispensing assembly as described herein. The actuation parameters of the syringe and the impulse generator were not changed for any of the liquids. This means that no specific calibration of the system was performed for each individual fluid.

Table 2 shows the coefficient of variation (CV) and the accuracy (Acc) obtained with the test liquids for 2 different target volumes (1 µL and 25 µL).

**Table 2:**

| Fluid → | | Water | A | B | C | D |
|---|---|---|---|---|---|---|
| CV | 1 µL | 0.9% | -1.9% | 1.8% | 1.8% | 1.3% |
| Acc | 1 µL | -3.4% | -8.8% | -1.0% | 0.3% | -1.3% |
| CV | 25 µL | 2.1% | 3.7% | 0.7% | 3.4% | 0.7% |
| Acc | 25 µL | 0.5% | -0.9% | 0.6% | -1.2% | -0.3% |

As can be seen in Table 2, the dispensing performance was as precise for the test liquids as it was for water. The CV was below 4% for all liquids. The accuracy ranged in between 0.3% at 1 µL for liquid C to 8.8% at 1 µL for liquid A. Table 2 illustrates a potential benefit of examples of the dispensing assembly when dispensing micro fluidic quantities of fluid. The variation and accuracy in the dispensing of the fluid is essentially independent of the rheological properties of the respective fluid. Such a dispensing assembly would therefore be useful when a variety of different fluids showing different rheological properties needs to be dispensed in very small micro fluidic quantities. For example in an automatic analyzer there may be different cartridges which dispense a variety of reagents. It may be beneficial to use an example of a dispensing assembly as described herein because it may not be necessary to calibrate for each particular reagent.

### List of reference numerals

- 100: dispenser assembly
- 100': dispenser assembly
- 100": dispenser assembly
- 102: cartridge holder
- 104: actuator
- 106: impulse generator
- 108: cartridge
- 110: plunger
- 112: piston
- 114: reservoir
- 115: outlet
- 116: nozzle
- 118: actor
- 120: orifice
- 200: dispenser assembly
- 202: controller
- 204: meniscus detector
- 206: fluid
- 208: meniscus
- 300: dispenser assembly
- 302: pinch valve
- 304: compression location
- 400: automatic analyzer
- 402: cartridge
- 402': cartridge
- 402": cartridge
- 406: sample holder
- 408: biological sample
- 410: relative movement means
- 412: relative movement
- 414: sensor system
- 420: computer
- 422: hardware interface
- 424: processor
- 426: user interface
- 428: computer storage
- 430: computer memory
- 432: analysis request
- 434: sensor data
- 436: analysis result
- 440: control module
- 500: dispenser assembly
- 502: syringe pump
- 600: dispenser assembly
- 700: dispenser assembly
- 702: bag
- 704: bag support
- 800: tube
- 802: piston
- 804: reservoir
- 806: outlet
- 900: dispenser assembly
- 902: syringe pump
- 904: plunger
- 905: inflatable gripper
- 906: piston
- 908: reservoir
- 910: nozzle
- 912: orifice
- 1000: dispenser assembly
- 1002: first direction
- 1004: second direction
- 1006: first distance
- 1008: second distance
- 1010: side wall

## Claims

1. A dispensing assembly (100, 100', 100", 200, 300, 500, 600, 700, 900, 1000) comprising:
- a cartridge holder (102), wherein the cartridge holder is operable for receiving a cartridge (108, 108', 108") operable for dispensing a fluid (206), wherein the cartridge comprises a reservoir (114, 804, 908) operable for receiving the fluid, wherein the reservoir comprises an outlet (115, 806), wherein the reservoir has an adjustable volume for forcing the fluid through the outlet, wherein the cartridge further comprises a nozzle (116, 912) having an orifice (120) for dispensing the fluid, wherein the nozzle is connected to the outlet;
- an actuator (104) for actuating the adjustable volume; and
- an impulse generator (106) for imparting an impulse to the nozzle;
**characterized in that**: the impulse generator comprises an actor (118) for contacting the nozzle; and wherein the dispensing assembly further comprises a controller (202, 420) for controlling the actuator and the impulse generator wherein the controller is programmed for controlling the actuator to force a predetermined volume of fluid through the outlet, wherein the controller is further programmed for controlling the impulse generator to impart an impulse to the nozzle after the predetermined volume of fluid is forced through the outlet and/or controlling the impulse generator to impart an impulse to the nozzle during the forcing of the predetermined volume fluid through the outlet.

2. The dispensing assembly of claim 1, wherein the dispensing assembly further comprises a meniscus detector (204) for detecting a meniscus (208) of the fluid.

3. The dispensing assembly of claim 2, wherein the meniscus detector is located between the orifice and the actor.

4. The dispensing assembly of claim 2 or 3, wherein the controller is programmed for:
- controlling the actuator to force fluid through the outlet;
- detecting the meniscus using the meniscus detector; and
- controlling the actuator to halt the forcing of fluid through the outlet when the meniscus is in a predetermined location.

5. The dispensing assembly of claims 2, 3, or 4, wherein the meniscus detector is any one of the following: a capacitive sensor, an optical sensor, and a camera.

6. The dispensing assembly of any one of any one of the preceding claims, wherein the controller is programmed to control the actuator to withdraw a second predetermined volume of fluid through the outlet from the nozzle after controlling the impulse generator to impart the impulse.

7. The dispensing assembly of any one of the preceding claims, wherein the actor is contact with the nozzle.

8. The dispensing assembly of any one of the preceding claims, wherein the nozzle is formed from a plastic.

9. The dispensing assembly of any one of the preceding claims, wherein the nozzle is operable for dispensing the fluid in a first direction (1002), wherein the actor is operable for contacting the nozzle with motion in a second direction (1004), wherein the first direction is transverse to the second direction.

10. The dispensing assembly of any one of the preceding claims, wherein the dispenser is a micro-fluidic dispensing assembly.

11. The dispensing assembly of any one of the preceding claims, wherein the dispensing assembly further comprises a valve (302) for sealing the nozzle at a sealing location (304).

12. The dispensing assembly of claim 11, wherein withdrawing the second predetermined volume of fluid causes a meniscus of the fluid within nozzle to withdraw to a withdrawal location, and wherein the sealing location is between the withdrawal location and the orifice.

13. The dispensing assembly of any one of the preceding claims, wherein the dispensing assembly comprises the cartridge.

14. The dispensing assembly of any one of the preceding claims, wherein the fluid comprises any one of the following: a reagent, a blood grouping reagent, a solvent, a diluent, a catalyst, an antibody, an enzyme, a recombinant protein, a virus isolate, a virus, a biological reagent, a protein, a salt, a detergent, a nucleic acid, an acid, a base, a dispersion, latex particles, nano particles, magnetic particles, stem cells, cells, a biological structure, a microorganism, and combinations thereof.

15. The dispensing assembly of any one of the preceding claims, wherein the cartridge comprises a syringe.

16. An automatic analyzer (400) for analyzing a biological sample (408) comprising a dispensing assembly according to any one of the preceding claims.

## Patentansprüche

1. Ausgabeanordnung (100, 100', 100", 200, 300, 500, 600, 700, 900, 1000), umfassend:
einen Kartuschenhalter (102), wobei der Kartuschenhalter zum Aufnehmen einer Kartusche (108, 108', 108") zum Ausgeben eines Fluids (206) dient, wobei die Kartusche einen Behälter (114, 804, 908) zum Aufnehmen des Fluids umfasst, wobei der Behälter einen Auslass (115, 806) umfasst, wobei der Behälter ein einstellbares Volumen zum Drängen des Fluids durch den Auslass aufweist, wobei die Kartusche ferner eine Düse (116, 912) mit einer Öffnung (120) zum Ausgeben des Fluids umfasst, wobei die Düse mit dem Auslass verbunden ist;
ein Stellglied (104) zum Betätigen des einstellbaren Volumens; und
einen Impulsgenerator (106) zum Übermitteln eines Impulses an die Düse;
**dadurch gekennzeichnet, dass**: der Impulsgenerator ein Stellglied (118) zum Berühren der Düse umfasst; und wobei die Ausgabeanordnung ferner eine Steuerung (202, 420) zum Steuern des Stellglieds und des Impulsgenerators umfasst, wobei die Steuerung zum Steuern des Stellglieds programmiert ist, um ein vorbestimmtes Volumen des Fluids durch den Auslass zu drängen, wobei die Steuerung ferner zum Steuern des Impulsgenerators, um einen Impuls zur Düse zu übermitteln, nachdem das vorbestimmte Volumen des Fluids durch den Auslass gedrängt wurde und/oder zum Steuern des Impulsgenerators, um einen Impuls zur Düse zu übermitteln, während das vorbestimmte Fluidvolumen durch den Auslass gedrängt wird, programmiert ist.

2. Ausgabeanordnung nach Anspruch 1, wobei die Ausgabeanordnung ferner einen Meniskusdetektor (204) zum Erfassen eines Meniskus (208) des Fluids umfasst.

3. Ausgabeanordnung nach Anspruch 2, wobei der Meniskusdetektor zwischen der Öffnung und dem Stellglied angeordnet ist.

4. Ausgabeanordnung nach Anspruch 2 oder 3, wobei die Steuerung programmiert ist zum:
Steuern des Stellglieds, um Fluid durch den Auslass zu drängen;
Erfassen des Meniskus unter Verwendung des Meniskusdetektors; und
Steuern des Stellglieds, um das Drängen des Fluids durch den Auslass anzuhalten, wenn der Meniskus an einer vorbestimmten Stelle liegt.

5. Ausgabeanordnung nach Ansprüchen 2, 3 oder 4, wobei der Meniskusdetektor einer der folgenden ist: ein kapazitiver Sensor, ein optischer Sensor und eine Kamera.

6. Ausgabeanordnung nach einem der vorstehenden Ansprüche, wobei die Steuerung programmiert ist, um das Stellglied zu steuern, um nach dem Steuern des Impulsgenerators, um den Impuls zu übermitteln, ein zweites vorbestimmtes Volumen des Fluids durch den Auslass aus der Düse zu entnehmen.

7. Ausgabeanordnung nach einem der vorstehenden Ansprüche, wobei das Stellglied mit der Düse in Kontakt ist.

8. Ausgabeanordnung nach einem der vorstehenden Ansprüche, wobei die Düse aus einem Kunststoff gebildet ist.

9. Ausgabeanordnung nach einem der vorstehenden Ansprüche, wobei die Düse zum Ausgeben des Fluids in einer ersten Richtung (1002) dient, wobei das Stellglied zum Berühren der Düse mit einer Bewegung in einer zweiten Richtung (1004) dient, wobei die erste Richtung quer zur zweiten Richtung liegt.

10. Ausgabeanordnung nach einem der vorstehenden Ansprüche, wobei das Ausgabegerät eine Mikrofluidik-Ausgabeanordnung ist.

11. Ausgabeanordnung nach einem der vorstehenden Ansprüche, wobei die Ausgabeanordnung ferner ein Ventil (302) zum Abdichten der Düse an einer Abdichtstelle (304) umfasst.

12. Ausgabeanordnung nach Anspruch 11, wobei das Entnehmen des zweiten vorbestimmten Volumens des Fluids einen Meniskus des Fluids innerhalb der Düse veranlasst, sich zu einer Entnahmestelle zurückzuziehen, und wobei die Abdichtstelle zwischen der Entnahmestelle und der Öffnung liegt.

13. Ausgabeanordnung nach einem der vorstehenden Ansprüche, wobei die Ausgabeanordnung die Kartusche umfasst.

14. Ausgabeanordnung nach einem der vorstehenden Ansprüche, wobei das Fluid eines der folgenden umfasst: ein Reagens, ein Blutgruppenreagens, ein Lösungsmittel, ein Verdünnungsmittel, einen Katalysator, einen Antikörper, ein Enzym, ein rekombinantes Protein, ein Virusisolat, einen Virus, ein biologisches Reagens, ein Protein, ein Salz, ein Spülmittel, eine Nukleinsäure, eine Säure, eine Base, eine Dispersion, Latexpartikel, Nanopartikel, Magnetpartikel, Stammzellen, Zellen, eine biologische Struktur, einen Mikroorganismus und Kombinationen davon.

15. Ausgabeanordnung nach einem der vorstehenden Ansprüche, wobei die Kartusche eine Spritze umfasst.

16. Automatisches Analysegerät (400) zum Analysieren einer biologischen Probe (408), umfassend eine Ausgabeanordnung nach einem der vorstehenden Ansprüche.

## Revendications

1. Ensemble de distribution (100, 100', 100", 200, 300, 500, 600, 700, 900, 1000) comprenant :
- un support de cartouche (102), dans lequel le support de cartouche est opérationnel pour recevoir une cartouche (108, 108', 108") opérationnelle pour distribuer un fluide (206), dans lequel la cartouche comprend un réservoir (114, 804, 908) opérationnel pour recevoir le fluide, dans lequel le réservoir comprend un orifice de sortie (115, 806), dans lequel le réservoir a un volume ajustable pour forcer le passage du fluide à travers l'orifice de sortie, dans lequel la cartouche comprend en outre une buse (116, 912) ayant un orifice (120) pour distribuer le fluide, dans lequel la buse est raccordée à l'orifice de sortie ;
- un actionneur (104) pour actionner le volume ajustable ; et
- un générateur d'impulsion (106) pour communiquer une impulsion à la buse ;
**caractérisé en ce que** : le générateur d'impulsion comprend un acteur (118) pour venir en contact avec la buse ; et dans lequel l'ensemble de distribution comprend en outre un dispositif de commande (202, 420) pour commander l'actionneur et le générateur d'impulsion dans lequel le dispositif de commande est programmé pour commander à l'actionneur de forcer le passage d'un volume de fluide prédéterminé à travers l'orifice de sortie, dans lequel le dispositif de commande est en outre programmé pour commander au générateur d'impulsion de communiquer une impulsion à la buse après le passage forcé du volume de fluide prédéterminé à travers l'orifice de sortie et/ou commander au générateur d'impulsion de communiquer une impulsion à la buse pendant le passage forcé du volume de fluide prédéterminé à travers l'orifice de sortie.

2. Ensemble de distribution selon la revendication 1, dans lequel l'ensemble de distribution comprend en outre un détecteur de ménisque (204) pour détecter un ménisque (208) du fluide.

3. Ensemble de distribution selon la revendication 2, dans lequel le détecteur de ménisque est situé entre l'orifice et l'acteur.

4. Ensemble de distribution selon la revendication 2 ou 3, dans lequel le dispositif de commande est programmé pour :
- commander à l'actionneur de forcer le passage de fluide à travers l'orifice de sortie ;
- détecter le ménisque à l'aide du détecteur de ménisque ; et
- commander à l'actionneur d'arrêter le passage forcé de fluide à travers l'orifice de sortie lorsque le ménisque est dans un emplacement prédéterminé.

5. Ensemble de distribution selon les revendications 2, 3 ou 4, dans lequel le détecteur de ménisque est l'un quelconque parmi les suivants : un capteur capacitif, un capteur optique et une caméra.

6. Ensemble de distribution selon l'une quelconque selon l'une quelconque des revendications précédentes, dans lequel le dispositif de commande est programmé pour commander à l'actionneur de prélever un second volume de fluide prédéterminé à travers l'orifice de sortie par la buse après avoir commandé au générateur d'impulsion de communiquer l'impulsion.

7. Ensemble de distribution selon l'une quelconque des revendications précédentes, dans lequel l'acteur est en contact avec la buse.

8. Ensemble de distribution selon l'une quelconque des revendications précédentes, dans lequel la buse est formée à partir d'un plastique.

9. Ensemble de distribution selon l'une quelconque des revendications précédentes, dans lequel la buse est opérationnelle pour distribuer le fluide dans une première direction (1002), dans lequel l'acteur est opérationnel pour venir en contact avec la buse avec un mouvement dans une seconde direction (1004), dans lequel la première direction est transversale à la seconde direction.

10. Ensemble de distribution selon l'une quelconque des revendications précédentes, dans lequel le distributeur est un ensemble de distribution microfluidique.

11. Ensemble de distribution selon l'une quelconque des revendications précédentes, dans lequel l'ensemble de distribution comprend en outre un robinet (302) pour obturer la buse en un emplacement d'obturation (304).

12. Ensemble de distribution selon la revendication 11, dans lequel le prélèvement du second volume de fluide prédéterminé amène un ménisque du fluide au sein de la buse à être prélevé en un emplacement de prélèvement, et dans lequel l'emplacement d'obturation se trouve entre l'emplacement de prélèvement et l'orifice.

13. Ensemble de distribution selon l'une quelconque des revendications précédentes, dans lequel l'ensemble de distribution comprend la cartouche.

14. Ensemble de distribution selon l'une quelconque des revendications précédentes, dans lequel le fluide comprend l'un
quelconque parmi les suivants : un réactif, un réactif de détermination des groupes sanguins, un solvant, un diluant, un catalyseur, un anticorps, une enzyme, une protéine recombinante, un isolat de virus, un virus, un réactif biologique, une protéine, un sel, un détergent, un acide nucléique, un acide, une base, une dispersion, des particules de latex, des nanoparticules, des particules magnétiques, des cellules souches, des cellules, une structure biologique, un micro-organisme, et leurs combinaisons.

15. Ensemble de distribution selon l'une quelconque des revendications précédentes, dans lequel la cartouche comprend une seringue.

16. Analyseur automatique (400) pour analyser un échantillon biologique (408) comprenant un ensemble de distribution selon l'une quelconque des revendications précédentes.
